(19)

Europäisches Patentamt

European Patent Office

Office européen des brevets

(11)　**EP 4 495 291 A1**

(12)　**EUROPEAN PATENT APPLICATION**
published in accordance with Art. 153(4) EPC

(43) Date of publication:
**22.01.2025   Bulletin 2025/04**

(21) Application number: 24786337.6

(22) Date of filing: 03.04.2024

(51) International Patent Classification (IPC):
$C25B\ 1/18$ (2006.01)　　$C01B\ 32/935$ (2017.01)
$C01B\ 32/942$ (2017.01)　$C07C\ 1/32$ (2006.01)
$C07C\ 11/24$ (2006.01)　$C25B\ 1/14$ (2006.01)

(52) Cooperative Patent Classification (CPC):
C01B 32/935; C01B 32/942; C07C 1/32;
C07C 11/24; C25B 1/14; C25B 1/18

(86) International application number:
**PCT/JP2024/013772**

(87) International publication number:
**WO 2024/214618 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 12.04.2023　JP 2023064932
　　　　　　25.03.2024　JP 2024048286

(71) Applicants:
　• **Daikin Industries, Ltd.
　　Osaka 530-0001 (JP)**
　• **The Doshisha
　　Kyoto 602-8580 (JP)**

(72) Inventors:
　• **GOTO, Takuya
　　Kyotanabe-shi
　　Kyoto 610-0394 (JP)**

　• **SUZUKI, Yuta
　　Kyotanabe-shi
　　Kyoto 610-0394 (JP)**
　• **WATANABE, Takashi
　　Kyotanabe-shi
　　Kyoto 610-0394 (JP)**
　• **ISOGAI, Tomohiro
　　Osaka-shi
　　Osaka 530-0001 (JP)**
　• **YAMAUCHI, Akiyoshi
　　Osaka-shi
　　Osaka 530-0001 (JP)**
　• **KISHIKAWA, Yosuke
　　Osaka-shi
　　Osaka 530-0001 (JP)**

(74) Representative: **Hoffmann Eitle
　　Patent- und Rechtsanwälte PartmbB
　　Arabellastraße 30
　　81925 München (DE)**

(54)　**METHOD FOR PRODUCING METAL CARBIDE AND HYDROCARBON, AND CARBON-CONTAINING MEMBER**

(57)　A method for producing a metal carbide comprising: preparing a molten salt containing at least one first metal ion selected from the group consisting of alkali metal ions and alkali earth metal ions; preparing an electrode containing carbon; and applying a voltage to the molten salt using the electrode to obtain a metal carbide composition containing a carbide of the first metal.

EP 4 495 291 A1

Fig. 1

```
                    ┌─────────────┐
                    │    START    │
                    └──────┬──────┘
                           │
                           ▼
            ┌──────────────────────────────┐
            │  PREPARATION OF MOLTEN SALT   │────  S11
            │   CONTAINING FIRST METAL ION  │
            └───────────────┬──────────────┘
                            │
                            ▼
            ┌──────────────────────────────┐
            │     PREPARATION OF CARBON     │────  S12
            │          ELECTRODE            │
            └───────────────┬──────────────┘
                            │
                            ▼
            ┌──────────────────────────────┐
            │     APPLICATION OF VOLTAGE    │────  S13
            │   (PRODUCTION OF FIRST METAL  │
            │           CARBIDE)            │
            └───────────────┬──────────────┘
                            │
                            ▼
                    ┌─────────────┐
                    │     END     │
                    └─────────────┘
```

**Description**

TECHNICAL FIELD

The present invention relates to methods for producing a metal carbide and a hydrocarbon, and a carbon-containing member.

BACKGROUND ART

Acetylene is an industrially important substance as a raw material for various organic compounds. Acetylene is usually obtained by the reaction of a metal carbide (mainly, calcium carbide) with water.

Calcium carbide is generally obtained by heating a mixture of calcined lime (calcium oxide) and coke in an electric furnace at high temperature (e.g., Patent Document 1). Patent Document 2 proposes to form coke into briquettes in advance and then mix with calcined lime upon production of calcium carbide. Patent Document 3 proposes a method for producing lithium carbide by reacting metal lithium obtained by molten electrolysis of lithium chloride with carbon powder such as carbon black. Non Patent Document 1 proposes a method for producing lithium carbide by reacting metal lithium obtained by molten salt electrolysis of lithium hydroxide with a carbon source such as carbon dioxide. Non Patent Document 2 proposes a method for producing lithium carbide by reacting metal lithium with carbon.

Citation List

Patent Document

Patent Document 1: JP S61-178412 A
Patent Document 2: JP 2018-35328 A
Patent Document 3: JP H02-256626 A

Non Patent Document

Non Patent Document 1: McEnaney JM, Rohr BA, Nielander AC, Singh AR, King LA, Norskov JK, Jaramillo TF, "A cyclic electrochemical strategy to produce acetylene from CO2, CH4, or alternative carbon sources.", Sustain Energy Fuels 4:2, 752-2759 (2020)
Non Patent Document 2: Uwe Ruschewitz, "Binary and ternary carbides of alkali and alkaline-earth metals", Coordination Chemistry Reviews 244, 115-136 (2003)

SUMMARY OF THE INVENTION

PROBLEMS TO BE SOLVED BY THE INVENTION

To produce a metal carbide, the raw material is usually required to be heated to 2,000°C or more. Thus, there are problems in that energy efficiency is low and a large amount of carbon dioxide is produced. In addition, Patent Documents 1 to 3 use carbon as it is as the carbon source of a metal carbide. Non Patent Document 1 discloses that, when carbon dioxide is used as the carbon source, although the yield of lithium carbide does not exceed 20% according to calculations, the yield of lithium carbide can be increased by using carbon as the carbon source. However, any experiment data supporting this are not demonstrated. Non Patent Document 2 discloses that amorphous carbon or graphite is used as the carbon source. However, to produce crystalline lithium carbide, it is required to bring the carbon source into contact with the steam of metal lithium at 800°C to 900°C or with metal lithium in an arc melting furnace at about 3,500°C or more.

An object of the present disclosure is to provide a production method in which the reaction rapidly proceeds at a relatively low temperature (e.g., 800°C or less) and which is capable of efficiently obtaining a metal carbide. The present disclosure further provides a method for producing a hydrocarbon from the obtained metal carbide. In addition, the present disclosure provides a metal carbide-supporting carbon-containing member.

SOLUTIONS TO THE PROBLEMS

The present disclosure includes the following aspects.

[1] A method for producing a metal carbide, including:

preparing a molten salt containing at least one first metal ion selected from the group consisting of alkali metal ions and alkali earth metal ions;
preparing an electrode containing carbon; and
applying a voltage to the molten salt using the electrode to obtain a metal carbide composition containing a carbide of the first metal.

[2] The method for producing a metal carbide according to the above [1], wherein the molten salt is substantially free from carbonate ions.

[3] The method for producing a metal carbide according to the above [1] or [2], wherein the electrode contains at least one selected from the group consisting of glassy carbon, natural graphite, isotropic carbon, highly oriented pyrolytic graphite, plastic formed carbon, and conductive diamond.

[4] The method for producing a metal carbide according to any one of the above [1] to [3], wherein the electrode contains highly oriented pyrolytic graphite.

[5] The method for producing a metal carbide according to any one of the above [1] to [4], wherein the molten salt contains at least one of a halide ion and an oxide ion as an anion.

[6] The method for producing a metal carbide according to any one of the above [1] to [5], wherein the molten salt contains both a halide ion and an oxide ion as an anion.

[7] The method for producing a metal carbide according to the above [5] or [6], wherein the molten salt contains a chloride ion as the halide ion.

[8] The method for producing a metal carbide according to the above [5] or [6], wherein the molten salt contains a fluoride ion as the halide ion.

[9] The method for producing a metal carbide according to any one of the above [1] to [8], wherein the metal carbide composition further contains at least one selected from the group consisting of carbon, a simple substance, a halide, a carbonate, an oxide, a hydride, and a peroxide of the first metal.

[10] The method for producing a metal carbide according to any one of the above [1] to [9], wherein the molten salt contains at least one selected from the group consisting of a lithium ion, a sodium ion, and a potassium ion, and a calcium ion as the first metal ion.

[11] A method for producing a hydrocarbon, including:

preparing a molten salt containing at least one first metal ion selected from the group consisting of alkali metal ions and alkali earth metal ions;
preparing an electrode containing carbon;
applying a voltage to the molten salt using the electrode to obtain a metal carbide composition containing a carbide of the first metal; and
hydrolyzing the carbide of the first metal to obtain gas containing a hydrocarbon.

[12] The method for producing a hydrocarbon according to the above [11], wherein the hydrocarbon is acetylene.

[13] The method for producing a hydrocarbon according to the above [11] or [12], wherein the gas includes acetylene as the hydrocarbon, and further includes at least one selected from the group consisting of ethylene, ethane, methane, methylacetylene, propylene, butene, and hydrogen.

[14] A carbon-containing member including:

a base containing carbon; and
a metal carbide composition supported on the base, the metal carbide composition containing a carbide of at least one first metal selected from the group consisting of alkali metals and alkali earth metals.

EFFECTS OF THE INVENTION

The present disclosure can provide a production method in which the reaction rapidly proceeds at a relatively low temperature and which is capable of efficiently obtaining a metal carbide, a method for producing a hydrocarbon from the obtained metal carbide, and a metal carbide-supporting carbon-containing member.

BRIEF DESCRIPTION OF THE DRAWINGS

FIG. 1 is a flow chart of the method for producing a metal carbide according to the present disclosure.
FIG. 2 is a flow chart of the method for producing a hydrocarbon according to the present disclosure.

DESCRIPTION of EMBODIMENTS

In the method for producing a metal carbide of the present disclosure, a voltage is applied to a molten salt containing at least one first metal ion selected from the group consisting of alkali metal ions and alkali earth metal ions to obtain a metal carbide. According to the method using the molten salt, the reaction rapidly proceeds at a relatively low temperature of 800°C or less, and a metal carbide can be efficiently obtained.

The present disclosure includes hydrolyzing the metal carbide obtained by the above method to obtain a hydrocarbon. According to this method, a hydrocarbon with high purity can be efficiently obtained.

The present disclosure includes a metal carbide-supporting carbon-containing member. This carbon-containing member can be utilized in the production of a hydrocarbon.

[Method for producing metal carbide]

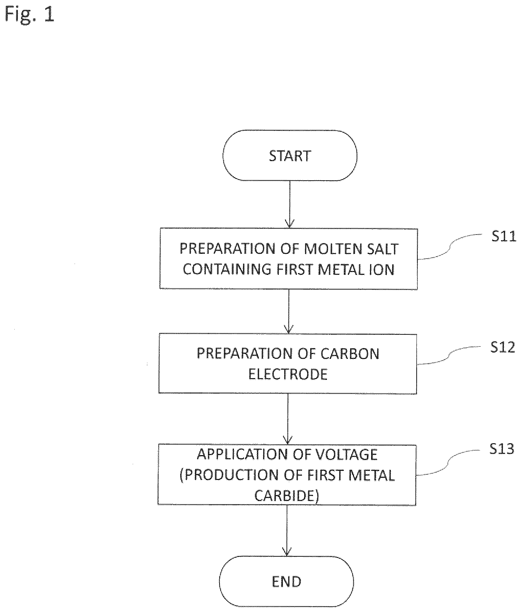

The method for producing a metal carbide according to the present disclosure includes preparing a molten salt containing at least one first metal ion selected from the group consisting of alkali metal ions and alkali earth metal ions, preparing an electrode containing carbon, and applying a voltage to the molten salt using the electrode to obtain a metal carbide composition containing a carbide of the first metal. According to the method of the present disclosure, the first metal carbide is obtained at a high yield. FIG. 1 is a flow chart of the method for producing a metal carbide according to the present disclosure.

(I) Preparation of molten salt (S11)

A molten salt containing the first metal ion is prepared. The first metal ion is the metal source of the target metal carbide. The molten salt is prepared by the ionization of a salt containing the first metal ion (first metal salt). It is not required that the whole first metal salt is ionized. For convenience, the metal salt contained in the electrolytic bath is referred to as the molten salt, also in the case where the metal salt is not completely ionized.

(First metal ion)

The first metal ion is at least one selected from the group consisting of alkali metal ions and alkali earth metal ions. Carbides of alkali metal and alkali earth metal, as are also referred to as acetylides, easily produce acetylene by hydrolysis and have a high industrial value.

The alkali metal is at least one selected from the group consisting of lithium (Li), sodium (Na), potassium (K), rubidium (Rb), cesium (Cs), and francium (Fr). The alkali metal may be at least one selected from the group consisting of Li, Na, K, Rb, and Cs. In particular, the alkali metal may be at least one selected from the group consisting of Li, Na, K, and Cs.

The alkali earth metal is at least one selected from the group consisting of beryllium (Be), magnesium (Mg), calcium (Ca), strontium (Sr), barium (Ba), and radium (Ra). The alkali earth metal may be at least one selected from the group consisting of Mg, Ca, Sr, and Ba.

In terms of industrial value, the first metal ion may contain an alkali earth metal ion. The first metal ion may contain both an alkali earth metal ion and an alkali metal ion. This is because the alkali metal ion has excellent functions as an electrolyte such that it allows the alkaline earth metal salt to be easily ionized and promotes the production of the alkali earth metal ion, reduces the melting point of the molten salt, and enables electrolysis to be performed at a further low temperature. The first metal ion may contain at least one selected from the group consisting of Li, Na, K, Rb, and Cs ions as the alkali metal ion, and at least one selected from the group consisting of Be, Mg, Ca, Sr, and Ba ions as the alkali earth metal ion. In particular, at least one of Li, Na, and K ions, and Ca ion may be contained.

The amount of the first metal ion contained in the molten salt is not limited. From the viewpoint of reaction efficiency, the number of moles of the first metal ion is preferably 1 mol% or more, more preferably 2 mol% or more, and particularly preferably 3 mol% or more, based on the total number of moles of the cation in the electrolytic bath. The number of moles of the first metal ion is preferably 20 mol% or less, more preferably 15 mol% or less, and particularly preferably 10 mol% or less, based on the total number of moles of the cation in the electrolytic bath. In an aspect, the number of moles of the first metal ion is 1 mol% or more and 20 mol% or less, based on the total number of moles of the cation in the electrolytic bath.

(Other metal ions)

The molten salt may contain other metal ions (second metal ion) other than the first metal ion. The second metal ion is not limited, as long as the first metal carbide which is the intended material can be stably precipitated. The salt of the second metal ion is preferably ionized at a temperature of 800°C or less.

The second metal is at least one selected from the group consisting of rare-earth elements, aluminum (Al), gallium (Ga), indium (In), thallium (Tl), zinc (Zn), cadmium (Cd), gold (Au), silver (Ag), and copper (Cu). Examples of the rare-earth element include scandium (Sc), yttrium (Y), lanthanoid elements, and actinoid elements.

(Anion)

The counter ion (anion) of the first and second metal ions is at least one selected from the group consisting of a halide ion, a sulfate ion, a phosphate ion, a nitrate ion, an acetate ion, a carboxylate ion, and an oxide ion ($O^{2-}$).

The anion may contain at least one of a halide ion and an oxide ion. Above all, the anion may contain both the halide ion and the oxide ion. While the oxide of the first metal is easily available, the melting temperature thereof tends to be high. The halide of the first metal is used as the molten salt, in general. However, halogen gas having high oxidation power (that may cause corrosion) may be produced by the halide ion at the anode. When both the halide ion and the oxide ion are contained, the melting temperature of the molten salt can be reduced while suppressing the generation of halogen gas.

Halogen is at least one selected from the group consisting of fluorine (F), chlorine (Cl), bromine (Br), iodine (I), and astatine (At). Halogen may be at least one selected from the group consisting of F, Cl, Br, and I, and in particular, F and/or Cl.

Examples of the first metal salt used in the preparation of the molten salt include first metal salts containing an alkali earth metal ion, and specific example thereof include $CaO$, $CaCl_2$, $CaF_2$, $CaBr_2$, $CaI_2$, $CaH_2$, and $Ca_3P_2$. Specific examples of the first metal salt containing an alkali metal ion include LiF, NaF, KF, RbF, CsF, LiCl, NaCl, KCl, RbCl, CsCl, LiBr, NaBr, KBr, RbBr, CsBr, LiI, NaI, KI, RbI, and CsI.

The molten salt is desirably substantially free from carbonate ions ($CO_3^{2-}$). When the molten salt contains carbonate ions, the carbonate ions react with electrons produced by the discharge of the first metal (Equation 1), so that carbon is easily produced. Accordingly, the yield of the first metal carbide is reduced. The molten salt substantially free from carbonate ions suppresses such a side reaction, leading to an increase in the yield of the first metal carbide.

$$\text{(Equation 1)} \qquad 2CO_3^{2-} + 8e^- \rightarrow 2C + 6O^{2-}$$

The term "substantially free from carbonate ions" permits the presence of carbonate ions to such an extent that carbonate ions are not involved in the electrolysis reaction. The molten salt may contain, for example, about 1.0 mol% or less of carbonate ions. The carbonate ion concentration in the molten salt may be 0.5 mol% or less, 0.3 mol% or less, or 0 mol%.

(II) Preparation of electrode containing carbon (S12)

An electrode containing carbon (hereinafter, sometimes referred to as "carbon electrode") is prepared. The carbon electrode functions as the cathode upon electrolysis. The carbon contained in the carbon electrode is the carbon source of the target metal carbide.

Carbon may be present at least on the surface of the carbon electrode. The surface of the carbon electrode is a part that may be brought into contact with the first metal ion.

The raw material of the carbon electrode is at least one carbon material selected from the group consisting of glassy carbon (GC), graphite (graphite), isotropic carbon, highly oriented pyrolytic graphite (HOPG), plastic formed carbon (PFC), and conductive diamond. Above all, from the viewpoint of faradaic efficiency, the raw material of the carbon electrode may be a carbon material having a high degree of crystallinity, or may be HOPG. Examples of the carbon material having a high degree of crystallinity include graphene, carbon nanotubes, carbon nanohorns, and carbon nanofibers (carbon fibers). The carbon electrode may be one obtained by forming the above carbon material, for example, a textile, a nonwoven fabric, or a felt-like one.

Alternatively, the carbon electrode may be one obtained by coating a formed article made of metal such as Ag, Cu, Ni, Pb, Hg, Tl, Bi, In, Sn, Cd, Au, Zn, Pd, Ga, Ge, Fe, Pt, Ru, Ti, Cr, Mo, W, V, Nb, Ta, Zr, or an alloy thereof with the above carbon material. The carbon electrode is not required to contain the first metal.

The material of the other electrode (anode) is not limited. Examples of the material of the anode include Pt, conductive metal oxides, and the above carbon materials. Examples of the electrode made of a conductive metal oxide include a transparent conductive electrode referred to as ITO electrode in which a film of a mixed oxide of indium and tin is formed on glass, an electrode referred to as DSA electrode (trademark of De Nora Permelec Ltd) in which a film of an oxide of a platinum metal such as ruthenium or iridium is formed on a substrate such as titanium, and a conductive metal oxide electrode having a composition such as $La_{1-r}Sr_xFeO_{3-\delta}$ ($0 \leq x \leq 0.5$ (in particular, $0.1 \leq x \leq 0.5$), $0 \leq \delta \leq 0.5$). Above all, a conductive metal oxide-based anode is preferable, from the viewpoint that wear due to the oxidation reaction hardly occurs.

(III) Application of voltage (S13)

Subsequently, a voltage is applied to the molten salt. Carbon is reduced on the cathode ($C \equiv C^{2-}$) and reacts with the first metal ion, so that a composition containing the first metal carbide (metal carbide composition) is obtained. The ionization of the first metal salt that has not been ionized in the molten salt is also promoted by the application.

When the first metal is Ca, calcium carbide ($CaC_2$) is produced (Equation 2). Typically, calcium carbide is precipitated on the cathode. On the cathode, metal calcium may be further produced by a side reaction (Equation 3). A part or the whole metal calcium produced by this side reaction may further react to be calcium carbide.

$$(Equation\ 2) \qquad Ca^{2+} + 2C + 2e^- \rightarrow CaC_2$$

$$(Equation\ 3) \qquad Ca^{2+} + 2e^- \rightarrow Ca$$

The application of a voltage is carried out at a temperature at which the molten state of the molten salt can be maintained. The temperature of the electrolytic bath may be, for example, 350°C or more, or 400°C or more. The temperature of the electrolytic bath may be, for example, 800°C or less, or 700°C or less. According to the present disclosure, the reaction proceeds at such a relatively low temperature, so that the energy efficiency is high.

The applied voltage is set so that the cathode potential can be a potential lower than the potential (Emc) at which the first metal is precipitated on the carbon electrode. Accordingly, the selectivity of the first metal carbide may be further improved. When the potential of the cathode is excessively high, the target first metal carbide is hardly produced. When the potential of the cathode is excessively low, a metal having a higher oxidation reduction potential in the molten salt than the set cathode potential is precipitated among metals contained in the molten salt, while the first metal carbide is produced. When a plurality of metals each having a similar oxidation reduction potential in the molten salt is present in the molten salt, an alloy of a plurality of metals may be precipitated depending on the set cathode potential. The potential Emc can be determined using the carbon electrode (e.g., HOPG electrode) by carrying out cyclic voltammetry measurement in the molten salt to be used.

The set current value when constant current electrolysis is carried out may be appropriately set so that the cathode potential during electrolysis can be the above-described potential range.

The metal carbide composition contains a carbide of the first metal. The first metal carbide is the main component of the metal carbide composition. The main component refers to a component that accounts for 50% by mass or more of the total mass of the metal carbide composition. The content of the first metal carbide may be 80% by mass or more, or 90% by mass or more of the mass of the metal carbide composition. The content of the first metal carbide may be 99.9% by mass or less, or 99% by mass or less of the mass of the metal carbide composition. In an aspect, the content of the first metal carbide is 80% by mass or more and 99.9% by mass or less of the mass of the metal carbide composition.

The metal carbide composition is usually supported on the cathode (strictly, a base derived from the carbon electrode used as the cathode). When a molten salt excellent in the solubility of the first metal carbide is used, the first metal carbide is dissolved in the molten salt in a part or the whole thereof. When the first metal carbide is dissolved in the molten salt in advance, the first metal carbide obtained by electrolysis is easily precipitated on the carbon electrode, and is easily supported on a base derived from the carbon electrode.

The metal carbide composition may contain at least one selected from the group consisting of carbon, a simple substance, a halide, a carbonate, an oxide, a hydride, and a peroxide of said at least one first metal. The metal carbide composition may further contain at least one selected from the group consisting of a simple substance, a halide, a carbonate, an oxide, and a carbide of said at least one second metal.

The metal carbide composition may further contain at least one selected from the group consisting of a solidified electrolyte (another metal salt), a halide of a material constituting the apparatus, an oxide, a metal, and a hydrate thereof.

The carbon contained in the metal carbide composition is, for example, at least one selected from the group consisting of nanocarbon materials such as graphite, amorphous carbon, glassy carbon, carbon nanotubes, diamond, nanodiamond, and graphene. By subsequently carrying out the electrolysis by the above method, the first metal carbide can be further obtained from the carbon contained in the metal carbide composition. In this case, the yield is further increased.

The presence confirmation and the quantitative determination of the first metal carbide, the simple substance of the first metal, the compound containing the first metal, and other impurities can be carried out by, for example, Raman spectroscopy and X-Ray diffraction (XRD) analysis of the composition.

[Carbon-containing member]

The present disclosure includes a carbon-containing member including a base containing carbon, and a metal carbide composition supported on the base, the metal carbide composition containing a carbide of at least one first metal selected from the group consisting of alkali metals and alkali earth metals. The carbon-containing member according to the present disclosure can be utilized in the production of a hydrocarbon.

The carbon-containing member is obtained by, for example, the above method for producing a metal carbide. That is, the carbon-containing member may correspond to the carbon electrode after the above molten salt is electrolyzed by using the above carbon electrode. In this case, the base is derived from the above carbon electrode.

The metal carbide composition is only required to be supported on at least a part of the surface of the base. The surface of the base typically corresponds to the part that has been in contact with the first metal ion of the carbon electrode. The term supported includes a state in which at least a part of the surface of the base is coated with the metal carbide composition.

However, the carbon contained in the carbon electrode is consumed as the carbon source of the first metal carbide, and thereafter, precipitated again as the first metal carbide. Thus, the original form of the base as the carbon electrode is usually not retained. In addition, the carbon electrode may contain a metal carbide, in some cases. Thus, there is a case where the metal carbide contained in the carbon electrode before electrolysis and the metal carbide produced by electrolysis cannot be clearly distinguished. In this case, for example, it can be confirmed whether the member is the carbon-containing member according to the present disclosure as follows.

When a cross section passing through the center (or center of gravity) of the carbon-containing member is subjected to elemental analysis with an energy dispersive X-ray analysis (EDX), the first metal and carbon are detected on the cross section. Since the base (carbon electrode) usually contains no first metal, it can be said that the detection of the first metal and carbon indicates the presence of the first metal carbide. Further, when the concentration of the first metal near the above center is higher than that in the vicinity of the outer edge in the above cross section, it can be said that the base and a metal carbide composition supported thereon are present. This is because the carbon present on the outer side usually more easily reacts than that present on the center of the carbon electrode (more easily becomes the first metal carbide). According to the above method, it can be confirmed whether the member is the carbon-containing member according to the present disclosure, even with a member in which the boundary between the base and the metal carbide composition is unclear.

[Method for producing hydrocarbon]

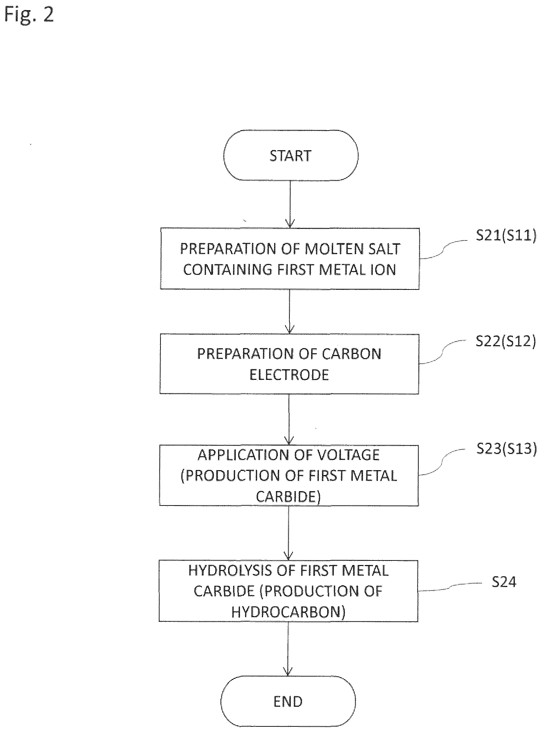

The present disclosure includes a method for producing a hydrocarbon from the first metal carbide. That is, the method for producing a hydrocarbon according to the present disclosure includes preparing a molten salt containing at least one first metal ion selected from the group consisting of alkali metal ions and alkali earth metal ions, preparing an electrode containing carbon (carbon electrode), applying a voltage to the molten salt using the charcoal electrode to obtain a metal carbide composition containing a carbide of the first metal, and hydrolyzing the carbide of the first metal to obtain gas containing a hydrocarbon. Fig. 2 is a flow chart of the method for producing a hydrocarbon according to the present disclosure.

(1) Preparation of molten salt (S21)

A molten salt is prepared in the same manner as in preparation of molten salt (S11) in the above method for producing a metal carbide.

(2) Preparation of electrode containing carbon (S22)

A carbon electrode is prepared in the same manner as in (II) preparation of electrode containing carbon (S12) in the above method for producing a metal carbide.

(3) Application of voltage (S23)

A voltage is applied to the molten salt in the same manner as in application of voltage (S13) in the above method for producing a metal carbide. Consequently, a composition containing the first metal carbide is obtained.

(4) Hydrolysis of metal carbide (S24)

Then, the first metal carbide is brought into contact with water and hydrolyzed. Consequently, gas containing the target hydrocarbon is obtained. According to the present disclosure, the faradaic efficiency e with respect to hydrocarbon production is improved. Usually, a hydrocarbon has a low solubility in water. Thus, the produced hydrocarbon is rapidly discharged into the gas phase and recovered.

The first metal carbide may be isolated from the carbide composition of a metal and hydrolyzed. Isolation is conducted by, for example, a method in which the carbide composition of a metal is pulverized and a difference in specific gravity is utilized. Alternatively, the carbide composition of a metal may be hydrolyzed as it is. For example, the electrode on which the metal carbide composition is precipitated (it may be the "carbon-containing member" according to the present disclosure) is brought into contact with water as it is. In this case, the carbide of the second metal that may be contained in the carbide composition of a metal is also hydrolyzed to produce a hydrocarbon.

Examples of the hydrocarbon to be obtained include methane, ethane, ethylene, acetylene ($C_2H_2$), methylacetylene, propane, propylene, butane, and butene. In the case where the isolated first metal carbide is used or the amount of impurities (in particular, a simple substance of metal) contained in the composition is small, acetylene is obtained as the main component. The main component refers to a component that accounts for 50% by mass or more of the total mass of the recovered gas. Acetylene is an industrially important hydrocarbon.

The gas to be obtained may contain water vapor, hydrogen, nitrogen, and oxygen as impurities, in addition to the hydrocarbon. The amount of impurities is preferably 10% by mass or less, and more preferably 1% by mass or less of the recovered gas. The amount of impurities may be 0.0001% by mass or more, or 0.001% by mass or more of the recovered gas. In an aspect, the amount of impurities is 0.0001% by mass or more and 1% by mass or less of the recovered gas.

The gas to be obtained may contain acetylene as the hydrocarbon, and may further contain at least one selected from the group consisting of ethylene, ethane, methane, methylacetylene, propylene, butene, and hydrogen.

The presence confirmation and the quantitative determination of the hydrocarbon and impurities can be carried out by, for example, gas chromatograph mass spectrometry (GC-MS analysis), Fourier transform infrared spectroscopy (FT-IR analysis) with gas cells, or ultraviolet-visible absorption spectroscopy (UV-Vis analysis) of the recovered gas.

The amount of water to be brought into contact with the composition is appropriately set depending on the mass of the composition. The above amount of water is, for example, more than the amount required for the hydrolysis of the metal carbide and metal contained in the composition. In addition, an amount of water that enables the entire composition to be immersed and takes the evaporation due to the heat generated upon hydrolysis into consideration is desirably used.

The hydrolysis of the first metal carbide produces the hydroxide of the first metal together with the hydrocarbon. For example, the hydrolysis of calcium carbide produces calcium hydroxide together with acetylene (Equation 4).

$$(\text{Equation 4}) \qquad CaC_2 + 2H_2O \rightarrow C_2H_2 + Ca(OH)_2$$

Hereinabove, the embodiments of the present disclosure have been described in detail, but the present disclosure is not limited thereto.

As the carbon electrode, one obtained by coating a formed article made of metal with a carbon material and one obtained by forming a carbon material to an electrode are exemplified in the above embodiments, but the carbon electrode is not limited thereto. The carbon electrode may be one obtained by precipitating a composition containing carbon on an electrode (typically, metal electrode) (hereinafter, referred to as the "third carbon electrode"). The third carbon electrode is obtained by, for example, electrolyzing a molten salt containing the first metal ion derived from the first metal carbonate and carbonate ions. Also, the third carbon electrode is obtained by, for example, electrolyzing a molten salt containing the first metal ion in the presence of carbonate ions derived from carbon dioxide. In these cases, the third carbon electrode is obtained as the cathode after electrolysis.

Examples

Hereinafter, the present invention will be more specifically described with reference to Examples, but the present invention is not limited thereto.

[Example 1-1]

(Production of metal carbide)

3.0 mol% of CaO with respect to LiCl, KCl, and $CaCl_2$ (LiCl/KCl/$CaCl_2$ = 52.3 mol%/11.6 mol%/36.1 mol%) having an eutectic composition was mixed thereinto, (that is, LiCl/KCl/$CaCl_2$/CaO = 50.8 mol%/11.3 mol%/35.0 mol%/2.9 mol%), and the mixture was dried in vacuum at 200°C and 100 Pa or less for 24 hours or more. This mixed salt was put in a container made of glass, set in an electric furnace, and heated to 450°C. Thus, a molten salt of LiCl-KCl-CaCl$_2$-CaO was obtained.

Then, a working electrode (1 cm $\times$ 1.5 cm HOPG), a counter electrode (a coil-shaped platinum wire), and a reference electrode (Ag$^+$/Ag) were attached to the lid of the above container, and the container was sealed with this lid. Subsequently, a voltage was applied for 30 minutes while maintaining the potential of the working electrode relative to the reference electrode at 0.3 V using a potentio-galvanostat. A precipitate was confirmed to be precipitated on the working electrode. All the experimental operations were carried out in a glove box in which a high purity argon atmosphere was maintained. The potential of the working electrode is a value obtained by measuring the potential between the reference electrode (Ag+/Ag) and the cathode, and calibrating the measured value based on the Li-Ca alloy precipitation potential.

(Preparation of hydrocarbon)

The precipitate was put in a sealed test tube. Pure water was added to the test tube in small portions at ambient temperature (23°C), and the precipitate was hydrolyzed. The total amount of the water added was 2.5 ml. After bubbling was confirmed to be generated in the test tube, the test tube was allowed to stand until no bubbling was observed. Subsequently, 100 $\mu$l (microliter) of the gas in the test tube was collected using a gas tight syringe.

The obtained gas was subjected to GC-MS analysis using a gas chromatograph (GC) apparatus, and the production of C$_2$H$_2$ as the main component was confinned. Further, methane, ethane, and hydrogen were confirmed to be produced as byproducts. In addition, water, carbon dioxide, nitrogen, oxygen, and argon were contained. The amount of each component produced was also confirmed. The mass proportion of C$_2$H$_2$ in the recovered gas was sufficiently larger than 50% by mass. The precipitate on the working electrode is understood to contain CaC$_2$ as the main component because the C$_2$H$_2$ gas was produced.

With respect to C$_2$H$_2$ gas production, the faradaic efficiency was calculated to be about 0.7%. It can be said that the higher the faradaic efficiency with respect to hydrocarbon gas production is, the higher the faradaic efficiency with respect to metal carbide production is.

[Example 1-2]

The precipitate and hydrocarbons were obtained in the same manner as in Example 1, except that a voltage was applied for 30 minutes while maintaining the potential of the working electrode with respect to the reference electrode at 0.1 V. The hydrocarbons were confirmed to include C$_2$H$_2$ as the main component. The precipitate on the working electrode is understood to contain CaC$_2$ because C$_2$H$_2$ gas was produced. With respect to C$_2$H$_2$ gas production, the faradaic efficiency was calculated to be about 8.8%.

[Examples 1-3 to 1-6]

The precipitate and hydrocarbons were obtained in the same manner as in Example 1-1, except that constant current electrolysis was carried out by maintaining the current density at a value shown in Table 1. The hydrocarbons were confirmed to include C$_2$H$_2$ as the main component. The precipitate on the working electrode is understood to contain CaC$_2$ as the main component because the C$_2$H$_2$ gas was produced. In Example 1-4, 2.0 mol% of CaC$_2$ with respect to the molten salt was added to the molten salt in advance.

[Table 1]

[Table 1]

| Molten salt: LiCl-KCl-CaCl2-Cao<br>Working electrode: HOPG | | | | | | | | | |
|---|---|---|---|---|---|---|---|---|---|
| Example | Additive | Electrolysis system | Temperature /°C | Potential /V | Current density /mAcm-2 | Electrolysis time /min | Electrolysis time /sec | Quantity of electricity /C | Faradaic efficiency /% |
| 1-1 | | Constant potential | 450 | 0.3 | | 30 | | 104.42 | 0.7 |
| 1-2 | | | | 0.1 | | 30 | | 211.12 | 8.8 |
| 1-3 | | Constant current | | | -62.5 | | 2880 | 180 | 23 |
| 1-4 | CaC2 | | | | -50 | | 1360 | 68 | 56 |
| 1-5 | | | | | -100 | | 500 | 100 | 4.3 |
| 1-6 | | | | | -200 | | 250 | 100 | 2.5 |

[Examples 2-1 to 2-5]

The precipitate and hydrocarbons were obtained in the same manner as in Example 1-1, except that graphite was used as the working electrode and electrolysis was carried out under the conditions shown in Table 2. The hydrocarbons were confirmed to include $C_2H_2$ as the main component. The precipitate on the working electrode is understood to contain $CaC_2$ as the main component because the $C_2H_2$ gas was produced.

[Table 2]

[Table 2]

| Molten salt: LiCl-KCl-CaCl2-CaO | | | | | | | | | |
| Working electrode: Graphite | | | | | | | | | |
| Example | Additive | Electrolysis system | Temperature /°C | Potential /V | Current density /mAcm-2 | Electrolysis time /min | Electrolysis time /sec | Quantity of electricity /C | Faradaic efficiency /% |
| 2-1 | - | Constant potential | 450 | 0.3 | | 30 | | 16.7 | 0.4 |
| 2-2 | | | | 0.1 | | 30 | | 24.07 | 0.3 |
| 2-3 | | Constant current | | | -50 | | 1800 | 90 | 3 |
| 2-4 | | | | | -100 | | 987 | 100 | 1 |
| 2-5 | | | | | -200 | | 493 | 100 | 1.1 |

[Examples 3-1, 3-2]

The precipitate and hydrocarbons were obtained in the same manner as in Example 1-1, except that GC was used as the working electrode and electrolysis was carried out under the conditions shown in Table 3. The hydrocarbons were confirmed to include $C_2H_2$ as the main component. The precipitate on the working electrode is understood to contain $CaC_2$ as the main component because the $C_2H_2$ gas was produced.

[Table 3]

[Table 3]

Molten salt: LiCl-KCl-CaCl2-CaO
Working electrode: GC

| Example | Additive | Electrolysis system | Temperature /°C | Potential /V | Current density /mAcm-2 | Electrolysis time /min | Electrolysis time /sec | Quantity of electricity /C | Faradaic efficiency /% |
|---|---|---|---|---|---|---|---|---|---|
| 3-1 | - | Constant potential | 450 | 0.1 | | 30 | | 38.33 | 0.1 |
| 3-2 | | Constant current | | | -200 | | 493 | 100 | 0.3 |

[Examples 4-1 to 4-7]

The precipitate and hydrocarbons were obtained in the same manner as in Example 1-1, except that a mixture in which 3.0 mol% of CaO and 7.0 mol% of $CaC_2$ were mixed with respect to NaCl, KCl, and $CaCl_2$ ($NaCl/KCl/CaCl_2$ = 33.4 mol%/l 1.6 mol%/55.0 mol%) (that is, $NaCl/KCl/CaCl_2/CaO/CaC_2$ = 30.4 mol%/10.5 mol%/50.0 mol%/2.7 mol%/6.4 mol%) was used as the molten salt, and electrolysis was carried out under the conditions shown in Table 4. The potential of the working electrode is a value obtained by measuring the potential between the reference electrode ($Ag^+/Ag$) and the cathode and calibrating the measured value based on the Na-K-Ca alloy precipitation potential. The hydrocarbons were confirmed to include $C_2H_2$ as the main component. The precipitate on the working electrode is understood to contain $CaC_2$ as the main component because the $C_2H_2$ gas was produced.

[Table 4]

[Table 4]

| Molten salt: NaCl-KCl-CaCl2-CaO<br>Additive: CaC$_2$ 7mol%<br>Working electrode: HOPG | | | | | | | | | |
|---|---|---|---|---|---|---|---|---|---|
| Example | Additive | Electrolysis system | Temperature /°C | Potential /V | Current density /mAcm-2 | Electrolysis time /min | Electrolysis time /see | Quantity of electricity /C | Faradaic efficiency /% |
| 4-1 | CaC2 | Constant potential | 550 | 1 | | 30 | | 350 | 2.6 |
| 4-2 | | | | 0.6 | | 30 | | 86 | 0.4 |
| 4-3 | | | | 0.3 | | 30 | | 28541 | 115.6 |
| 4-4 | | | | 0.1 | | 30 | | 38522 | 88.1 |
| 4-5 | | | | -0.2 | | 30 | | 92427 | 44.2 |
| 4-6 | | Constant current | | | -100 | | 500 | 30460 | 65 |
| 4-7 | | | | | -200 | | 250 | 25847 | 55.2 |

[Examples 5-1 to 5-12]

The precipitate and hydrocarbons were obtained in the same manner as in Example 1-1, except that NaCl, KCl, and CaCl$_2$ (NaCl/KCl/CaCl$_2$ = 33.4 mol%/11.6 mol%/55.0 mol%) were used as the molten salt, and electrolysis was carried out at 550°C under the conditions shown in Table 5. In Examples 5-3 to 5-5, 1.0 mol% of CaC$_2$ with respect to the molten salt was added to the molten salt. In Examples 5-6 to 5-12, 7.0 mol% of CaC$_2$ with respect to the molten salt was added to the molten salt.

The amount of gas produced by hydrolysis (mL) and the faradaic efficiency with respect to C$_2$H$_2$ production calculated by analyzing the gas were shown in Table 5. The amount of gas produced and faradaic efficiency were also shown in Table 6 to Table 8. The hydrocarbons were confirmed to include C$_2$H$_2$ as the main component. The precipitate on the working electrode is understood to contain CaC$_2$ as the main component because the C$_2$H$_2$ gas was produced.

[Table 5]

EP 4 495 291 A1

[Table 5]

Molten salt: NaCl-KCl-CaCl2
Working electrode: graphite
Temperature: 550°C
Atmosphere: Ar

| Example | Amount of CaC2 added /mol% | Electrolysis system | Potential /V | Current density /mAcm-2 | Electrolysis time/min | Quantity of electricity /C | Faradaic efficiency/% | Amount of gas produced/mL |
|---|---|---|---|---|---|---|---|---|
| 5-1 | 0 | Constant potential | 0.1 | | 30 | 26.75 | 14.5 | 1.5 |
| 5-2 | | | -0.2 | | 30 | 210.45 | 2.1 | 7.5 |
| 5-3 | 1 | Constant potential | 0.3 | | 30 | 28.36 | 0.3 | 1 |
| 5-0 | | | 0.1 | | 30 | 40.53 | 21.7 | 2.5 |
| 5-5 | | | -0.2 | | 30 | 231.87 | 2.7 | 8 |
| 5-6 | 7 | Constant potential | 1 | | 30 | 0.44 | 10 | - |
| 5-7 | | | 0.6 | | 30 | 2.68 | 7.5 | - |
| 5-8 | | | 0.3 | | 30 | 10.44 | 3 | - |
| 5-9 | | | 0.1 | | 30 | 48.34 | 35.2 | - |
| 5-10 | | | -0.2 | | 30 | 210.85 | 8.4 | - |
| 5-11 | | Constant current | | -100 | 987 | 100 | 19.6 | - |
| 5-12 | | | | -200 | 493 | 100 | 13.4 | - |

[Examples 6-1 to 6-10]

The precipitate and hydrocarbons were obtained in the same manner as in Example 5-1, except that GC (glassy carbon) was used as the working electrode and electrolysis was carried out under the conditions shown in Table 6. In Examples 6-3 to 6-5, 1.0 mol% of $CaC_2$ with respect to the molten salt was added to the molten salt. In Examples 6-6 to 6-10, 7.0 mol% of $CaC_2$ with respect to the molten salt was added to the molten salt. The hydrocarbons were confirmed to include $C_2H_2$ as the main component. The precipitate on the working electrode is understood to contain $CaC_2$ as the main component because the $C_2H_2$ gas was produced.

[Table 6]

[Table 6]

Molten salt: NaCl-KCl-CaCl2
Working electrode: glassy carbon
Temperature: 550°C
Atmosphere: Ar

| Example | Amount of CaC2 added /mol% | Electrolysis system | Potential /V | Current density /mAcm-2 | Electrolysis time/min | Quantity of electricity /C | Faradaic efficiency/% | Amount of gas produced/mL |
|---|---|---|---|---|---|---|---|---|
| 6-1 | 0 | Constant potential | 0.1 | | 30 | 15.92 | 2.6 | 2 |
| 6-2 | | | -0.2 | | 30 | 174.88 | 2 | 2.5 |
| 6-3 | 1 | Constant potential | 0.1 | | 30 | 38.49 | 8.7 | 2 |
| 6-4 | | | -0.2 | | 30 | 161.43 | 4 | 3 |
| 6-5 | | | 0.3 | | 30 | 34.83 | 2.4 | 1 |
| 6-6 | 7 | Constant potential | 0.3 | | 30 | 23.4 | 169.9 | 4 |
| 6-7 | | | 0.1 | | 30 | 36.54 | 22.5 | 2 |
| 6-8 | | | -0.2 | | 30 | 157.14 | 28.2 | 6 |
| 6-9 | | Constant current | | -100 | 987 | 100 | 6.3 | 1.9 |
| 6-10 | | | | -200 | 493 | 100 | 3.5 | 2.2 |

[Examples 7-1 to 7-4]

The precipitate and hydrocarbons were obtained in the same manner as in Example 5-1, except that HOPG (highly oriented pyrolytic graphite) was used as the working electrode and electrolysis was carried out under the conditions shown in Table 7. In Examples 7-3 to 7-4, 1.0 mol% of $CaC_2$ with respect to the molten salt was added to the molten salt.

The hydrocarbons were confirmed to include $C_2H_2$ as the main component. The precipitate on the working electrode is understood to contain $CaC_2$ as the main component because the $C_2H_2$ gas was produced.

[Table 7]

[Table 7]

| Molten salt: NaCl-KCl-CaCl2 | | | | | | | | |
| Working electrode: HOPG | | | | | | | | |
| Temperature: 550°C | | | | | | | | |
| Atmosphere: Ar | | | | | | | | |
| Example | Amount of CaC2 added /mol% | Electrolysis system | Potential /V | Current density /mAcm-2 | Electrolysis time/min | Quantity of electricity /C | Faradaic efficiency/% | Amount of gas produced/mL |
|---|---|---|---|---|---|---|---|---|
| 7-1 | 0 | Constant potential | 0.1 | | 30 | 134.2 | 9.2 | 4.8 |
| 7-2 | | | -0.2 | | 30 | 308.92 | 22.2 | 3 |
| 7-3 | 1 | Constant potential | 0.1 | | 30 | 76.52 | 17.2 | 1.5 |
| 7-4 | | | -0.2 | | 30 | 284.96 | 20.7 | 2.5 |

[Examples 8-1 to 8-5]

The precipitate and hydrocarbons were obtained in the same manner as in Example 5-1, except that PFC (plastic formed carbon) was used as the working electrode and electrolysis was carried out under the conditions shown in Table 8. In Examples 8-1 to 8-5, 7.0 mol% of $CaC_2$ with respect to the molten salt was added to the molten salt.

The hydrocarbons were confirmed to include $C_2H_2$ as the main component. The precipitate on the working electrode is understood to contain $CaC_2$ as the main component because the $C_2H_2$ gas was produced.

[Table 8]

[Table 8]

Molten salt: NaCl-KCl-CaCl2
Working electrode: plastic formed carbon
Temperature: 550°C
Atmosphere: Ar

| Example | Amount of CaC2 added /mol% | Electrolysis system | Potential /V | Current density /mAcm-2 | Electrolysis time/min | Quantity of electricity /C | Faradaic efficiency/% | Amount of gas produced/mL |
|---|---|---|---|---|---|---|---|---|
| 8-1 | 7 | Constant potential | 0.3 | | 30 | 57.44 | 78.2 | 4.5 |
| 8-2 | | | 0.1 | | 30 | 61.08 | 46.5 | 4 |
| 8-3 | | | -0.2 | | 30 | 234.41 | 25.1 | 2 |
| 8-4 | | Constant current | | -100 | 500 | 100 | 0.9 | 4 |
| 8-5 | | | | -200 | 250 | 100 | 24.7 | 3 |

EP 4 495 291 A1

The faradaic efficiency e with respect to $C_2H_2$ production was calculated as follows.

First, the volume proportion of $C_2H_2$ contained in the recovered gas was calculated based on the total area of the peaks and the calibration curve obtained by GC-MS analysis. Then, the volume of $C_2H_2$ produced was calculated based on the volume occupied by the gas phase in the recovery container and the volume proportion of $C_2H_2$ in the calculated gas. Finally, the faradaic efficiency e (%) was calculated by the following expression assuming that the $C_2H_2$ produced was in standard conditions (0°C, 101 kPa).

[Expression 1]

$$e\,[\%] = \frac{\text{Actually measured amount of C2H2 produced [mol]}}{\text{Theoretical amount of C2H2 produced, determined from electrical quantity [mol]}} \times 100$$

$$= \frac{\dfrac{\text{Calculated volume of C2H2 produced [L]}}{\text{Volume of C2H2 in standard state (22.4) [L/mol]}}}{\dfrac{\text{Average current value during electrolysis [A]} \times \text{electrolysis time [s]}}{\text{Faraday constant (96485) [C/mol]} \times \text{Number of electrons in C2H2 (10) [-]}}} \times 100$$

As can be understood from Tables 1 to 8, the target first metal carbide is obtained by any of constant potential electrolysis and constant current electrolysis. In particular, when HOPG having a high degree of crystallinity was used as the working electrode, acetylene (the first metal carbide) was successfully obtained with a high faradaic efficiency. Hydrocarbons were successfully obtained from the obtained precipitate with a high faradaic efficiency by using the NaCl-KCl-CaCl$_2$ molten salt. Addition of CaC$_2$ to the molten salt as an additive is desirable in terms of faradaic efficiency. This is considered because CaC$_2$ produced on the working electrode was suppressed to be dissolved in the molten salt.

INDUSTRIAL APPLICABILITY

The production method of the present disclosure is useful in various fields because it enables the reaction to rapidly proceed at a relatively low temperature and a metal carbide to be efficiently obtained.

The present application claims priority based on JP 2023-064932 filed on April 12, 2023 and JP 2024-048286 filed on March 25, 2024, and the entire content of which is incorporated herein by reference.

**Claims**

1. A method for producing a metal carbide comprising:

    preparing a molten salt containing at least one first metal ion selected from the group consisting of alkali metal ions and alkali earth metal ions;
    preparing an electrode containing carbon; and
    applying a voltage to the molten salt using the electrode to obtain a metal carbide composition containing a carbide of the first metal.

2. The method for producing a metal carbide according to claim 1, wherein the molten salt is substantially free from carbonate ions.

3. The method for producing a metal carbide according to claim 1 or 2, wherein the electrode contains at least one selected from the group consisting of glassy carbon, natural graphite, isotropic carbon, highly oriented pyrolytic graphite, plastic formed carbon, and conductive diamond.

4. The method for producing a metal carbide according to any one of claims 1 to 3, wherein the electrode contains highly oriented pyrolytic graphite.

5. The method for producing a metal carbide according to any one of claims 1 to 4, wherein the molten salt contains at least one of a halide ion and an oxide ion as an anion.

6. The method for producing a metal carbide according to any one of claims 1 to 5, wherein the molten salt contains both a halide ion and an oxide ion as the anion.

7. The method for producing a metal carbide according to claim 5 or 6, wherein the molten salt contains a chloride ion as the halide ion.

8. The method for producing a metal carbide according to claim 5 or 6, wherein the molten salt contains a fluoride ion as the halide ion.

9. The method for producing a metal carbide according to any one of claims 1 to 8, wherein the metal carbide composition further contains at least one selected from the group consisting of carbon, a simple substance, a halide, a carbonate, an oxide, a hydride, and a peroxide of the first metal.

10. The method for producing a metal carbide according to any one of claims 1 to 9, wherein the molten salt contains one selected from the group consisting of a lithium ion, a sodium ion, and a potassium ion, and a calcium ion as the first metal ion.

11. A method for producing a hydrocarbon, comprising:

    preparing a molten salt containing at least one first metal ion selected from the group consisting of alkali metal ions and alkali earth metal ions;
    preparing an electrode containing carbon;
    applying a voltage to the molten salt using the electrode to obtain a metal carbide composition containing a carbide of the first metal; and
    hydrolyzing the carbide of the first metal to obtain gas containing a hydrocarbon.

12. The method for producing a hydrocarbon according to claim 11, wherein the hydrocarbon is acetylene.

13. The method for producing a hydrocarbon according to claim 11 or 12, wherein the gas comprises acetylene as the hydrocarbon, and further comprises at least one selected from the group consisting of ethylene, ethane, methane, methylacetylene, propylene, butene, and hydrogen.

14. A carbon-containing member comprising:

    a base containing carbon, and
    a metal carbide composition supported on the base, the metal carbide composition containing a carbide of at least one first metal selected from the group consisting of alkali metals and alkali earth metals.

Fig. 1

```
                    ┌─────────────┐
                    │    START    │
                    └──────┬──────┘
                           │
                           ▼
        ┌──────────────────────────────────┐
        │   PREPARATION OF MOLTEN SALT      │──── S11
        │   CONTAINING FIRST METAL ION      │
        └──────────────────┬───────────────┘
                           │
                           ▼
        ┌──────────────────────────────────┐
        │      PREPARATION OF CARBON        │──── S12
        │           ELECTRODE               │
        └──────────────────┬───────────────┘
                           │
                           ▼
        ┌──────────────────────────────────┐
        │     APPLICATION OF VOLTAGE        │──── S13
        │   (PRODUCTION OF FIRST METAL      │
        │           CARBIDE)                │
        └──────────────────┬───────────────┘
                           │
                           ▼
                    ┌─────────────┐
                    │     END     │
                    └─────────────┘
```

Fig. 2

```
                        ┌─────────────┐
                        │    START    │
                        └──────┬──────┘
                               │
                               ▼
              ┌──────────────────────────────────┐        S21(S11)
              │  PREPARATION OF MOLTEN SALT       │
              │  CONTAINING FIRST METAL ION       │
              └─────────────────┬────────────────┘
                                │
                                ▼
              ┌──────────────────────────────────┐        S22(S12)
              │     PREPARATION OF CARBON         │
              │          ELECTRODE                │
              └─────────────────┬────────────────┘
                                │
                                ▼
              ┌──────────────────────────────────┐        S23(S13)
              │     APPLICATION OF VOLTAGE        │
              │  (PRODUCTION OF FIRST METAL       │
              │          CARBIDE)                 │
              └─────────────────┬────────────────┘
                                │
                                ▼
              ┌──────────────────────────────────┐        S24
              │  HYDROLYSIS OF FIRST METAL        │
              │  CARBIDE (PRODUCTION OF           │
              │       HYDROCARBON)                │
              └─────────────────┬────────────────┘
                                │
                                ▼
                        ┌─────────────┐
                        │     END     │
                        └─────────────┘
```

## INTERNATIONAL SEARCH REPORT

| International application No. |
| --- |
| **PCT/JP2024/013772** |

| | |
| --- | --- |
| **A.** | **CLASSIFICATION OF SUBJECT MATTER** |

*C25B 1/18*(2006.01)i; *C01B 32/935*(2017.01)i; *C01B 32/942*(2017.01)i; *C07C 1/32*(2006.01)i; *C07C 11/24*(2006.01)i; *C25B 1/14*(2006.01)i

FI: C25B1/18; C01B32/935; C01B32/942; C07C1/32; C07C11/24; C25B1/14

According to International Patent Classification (IPC) or to both national classification and IPC

| | |
| --- | --- |
| **B.** | **FIELDS SEARCHED** |

Minimum documentation searched (classification system followed by classification symbols)

C25B1/18; C25B1/14; C25D11/00; C25C3/02-3/04; C01B32/935-32/942

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 2952591 A (UNION CARBIDE CORPORATION) 13 September 1960 (1960-09-13) column 1, line 70 to column 2, line 16, examples | 1-14 |
| P, X | CN 116288415 A (WUHAN UNIVERSITY) 23 June 2023 (2023-06-23) entire text, all drawings | 1-2, 5-14 |
| P, X | WO 2023/058619 A1 (THE DOSHISHA) 13 April 2023 (2023-04-13) claims, paragraph [0060], examples | 1, 3-14 |
| P, X | WO 2023/058620 A1 (THE DOSHISHA) 13 April 2023 (2023-04-13) claims, paragraph [0050], examples | 1, 3-5, 7-14 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

International application No.

**PCT/JP2024/013772**

| Patent document cited in search report | | | Publication date (day/month/year) | Patent family member(s) | | | Publication date (day/month/year) |
|---|---|---|---|---|---|---|---|
| US | 2952591 | A | 13 September 1960 | (Family: none) | | | |
| CN | 116288415 | A | 23 June 2023 | (Family: none) | | | |
| WO | 2023/058619 | A1 | 13 April 2023 | JP | 2023-54787 | A | |
| WO | 2023/058620 | A1 | 13 April 2023 | JP | 2023-54787 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S61178412 A
- JP 2018035328 A
- JP H02256626 A
- JP 2023064932 A
- JP 2024048286 A

### Non-patent literature cited in the description

- **MCENANEY JM** ; **ROHR BA** ; **NIELANDER AC** ; **SINGH AR** ; **KING LA** ; **NORSKOV JK** ; **JARAMILLO TF**. A cyclic electrochemical strategy to produce acetylene from CO2, CH4, or alternative carbon sources.. *Sustain Energy Fuels*, 2020, vol. 4 (2), 752-2759
- **UWE RUSCHEWITZ**. Binary and ternary carbides of alkali and alkaline-earth metals. *Coordination Chemistry Reviews*, 2003, vol. 244, 115-136